# EUROPEAN PATENT APPLICATION

(11) **EP 4 691 755 A1**
(43) Date of publication of application: **11.02.2026**
(21) Application number: 24819404.5
(22) Date of filing: 06.06.2024
(51) Int. Cl.: B32B 3/18, B32B 37/14

(54) **METHOD FOR MANUFACTURING PANEL AND PANEL**

(30) Priority: 06.06.2023 JP 2023093185
(71) Applicant: Mitsubishi Heavy Industries, Ltd., Tokyo 100-8332 (JP)
(72) Inventor: NISHIBU, Kouji, Nagoya-shi, Aichi 455-0024 (JP); HORIZONO, Hideki, Tokyo 100-8332 (JP); OKA, Kosuke, Tokyo 100-8332 (JP); ISHIDA, Takashi, Nagoya-shi, Aichi 460-0008 (JP); DENGO, Tomoharu, Nagoya-shi, Aichi 460-0008 (JP); KAMO, Sota, Tokyo 100-8332 (JP)
(74) Representative: Hoffmann Eitle
(86) International application number: PCT/JP2024/020782
(87) International publication number: WO 2024/253177

(57) **Abstract**

Provided is a panel in which it is possible to satisfactorily ensure the strength of a resin reinforcing the periphery of a fastening hole. This method for manufacturing a panel (100) in which outer plates (20) are fixed to both surfaces of a core (10) having a plurality of cavities comprises: a through-hole formation step for forming a through-hole (12) in the core (10) within a range including a formation position at which a fastening hole (30) is to be formed in the panel (100); a filling step for filling the through-hole (12) with a resin (13) containing a glass filler (14) as reinforcing fibers including at least short fibers; and a panel-formation step for positioning the outer plates (20) on both surfaces of the core (10), performing a heat treatment on the core (10) and the outer plates (20), and joining the core (10) and the outer plates (20) to form a panel.

## Description

### Technical Field

The present invention relates to a method for manufacturing a panel and a panel.

### Background Art

In the related art, a technique for fastening a fastened member to another structure using a fastener is known. For example, PTL 1 discloses a fastening part structure where continuous fibers having a high elastic modulus are wound and disposed in an insertion hole for a fastening tool such as a bolt provided in a structure formed of a fiber-reinforced resin. In addition, PTL 2 discloses a fastening structure of a fastened member where a through-hole for fastening is formed in a fastened member that contains reinforcing fibers with a resin as a matrix and is formed in a plate shape, and a reinforcing member having a higher compressive elastic modulus than the resin is disposed in the periphery of the through-hole. In addition, PTL 3 discloses a fastening structure of a fastened member where a reinforcing member that is a fiber-reinforced composite material containing reinforcing fibers with a resin as a matrix is disposed in a through-hole for fastening of the fastened member that is a resin molded product into which a fastening member can be inserted.

In addition, as the fastened member, a so-called sandwich panel where skins are fixed to both surfaces of a member that forms a core, respectively, is known. For example, PTL 4 discloses a method for manufacturing a panel where a first skin and a second skin formed of a fiber-reinforced composite material are bonded to both surfaces of a core formed to have a honeycomb structure, respectively.

### Citation List

### Patent Literature

[PTL 1] Japanese Unexamined Utility Model Registration Application Publication No. S63-172628
[PTL 2] Japanese Unexamined Patent Application Publication No. 2011-17400
[PTL 3] Japanese Unexamined Patent Application Publication No. 2011-02069
[PTL 4] Japanese Patent No. 5721557

### Summary of Invention

### Technical Problem

The panel described in PTL 4 is fastened to another structure using a fastener. In order to fasten the panel to the other structure, a fastening hole needs to be formed in the panel as in the structure described in PTL 1 to PTL 3. However, when the core of the panel is, for example, a honeycomb core or a foam core, many cavities are present in the core, and the core is weak to a local load. Therefore, the fastening hole penetrating the core cannot be formed. Accordingly, it is considered to reinforce the periphery of the fastening hole with the resin by filling (so-called potting) the core with the resin in advance at a position where the fastening hole is formed in the panel.

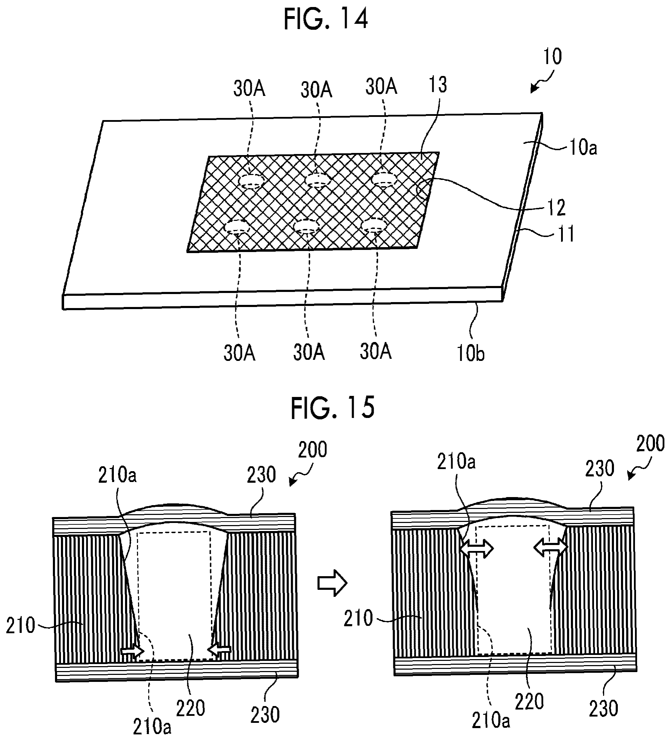

Here, in the process of forming the panel containing the core filled with the resin by potting, the panel may be heated. For example, when the skin is a fiber-reinforced composite material, the entire panel containing the core may be heated to cure the fiber-reinforced composite material in a prepreg state. In addition, for example, in order to cure an adhesive agent for bonding the core and the skins, the panel may also be heated. FIG. 15 is a diagram illustrating an example of a state of a force acting on the resin when the panel filled with the resin is heated and subsequently cooled. The left diagram in FIG. 15 illustrates a state where a panel 200 is heated, and the right diagram in FIG. 15 illustrates the subsequent cooling process. FIG. 15 illustrates an example where a skin 230 is a fiber-reinforced composite material. In addition, in the example of FIG. 15, as indicated by white arrows in the left diagram, a resin 220 is compressed on the lower skin 230 side, and the resin 220 expands on the upper skin 230 side.

As illustrated in the left diagram, when the resin 220 expands, a through-hole 210a for resin filling formed in a core 210 is enlarged from a state indicated by a broken line in the drawing. The skin 230 in the prepreg state is also enlarged by the resin 220 and subsequently thermally cured. When the skin 230 is, for example, a metal member, it is considered that the deformation amount of the skin 230 further decreases. However, as described above, the through-hole 210a is also enlarged due to the expansion of the resin 220. Next, in the cooling process, although the resin 220 is contracted, after the heating process, the core 210 is bonded to the skins 230, and the shape of the through-hole 210a does not substantially change. As a result, as indicated by the white arrows in the right diagram, tensile stress is generated between the resin 220 and the core 210. Due to this tensile stress, cracking may occur in the resin 220, and there is a possibility that the periphery of the fastening hole cannot be favorably reinforced by the resin 220.

The present invention has been made under the above-described circumstances, and an object thereof is to provide a panel where a strength of a resin that reinforces the periphery of a fastening hole can be favorably ensured.

### Solution to Problem

In order to solve the above-described problems and to achieve the object, according to the present invention, there is provided a method for manufacturing a panel where skins are fixed to both surfaces of a core including a plurality of cavities, respectively, the method including: a through-hole forming step of forming a through-hole in the core in a range including a formation position where a fastening hole is formed in the panel; a filling step of filling the through-hole with a resin that contains reinforcing fibers containing at least short fibers; and a panel forming step of disposing the skins on both surfaces of the core, respectively, heating the core and the skins, and joining the core and the skins to form a panel.

With this configuration, the through-hole of the core is filled with the resin that contains the reinforcing fibers containing at least the short fibers. Therefore, the reinforcing fibers favorably suppress the propagation of cracking in the resin. That is, toughness of the resin is improved. As a result, even when the resin expands by heating, the resin is contracted in the subsequent cooling process, and the tensile stress is generated in the resin in a state where the core and the skins are bonded, the occurrence of cracking in the resin can be suppressed. Accordingly, according to the present invention, it is possible to obtain a panel where the strength of the resin that reinforces the periphery of the fastening hole can be favorably ensured.

In addition, it is preferable that a weight of the reinforcing fibers is 1% or more and less than 5% with respect to a total weight of the resin containing the reinforcing fibers.

With this configuration, while allowing the reinforcing fibers to suppress the occurrence of cracking in the resin, an increase in the viscosity of the resin caused by containing the reinforcing fibers, that is, a decrease in fluidity can be suppressed, and manufacturing easiness of the core can be ensured.

In addition, it is preferable that, in the filling step, the through-hole is filled with the resin multiple times.

With this configuration, the through-hole is filled with a relatively small amount of the resin for each filling. Therefore, as compared to a case where the through-hole is filled with a large amount of the resin, gas is likely to be separated from the inside of the resin, and formation of voids in the resin can be suppressed. In addition, the reinforcing fibers can be allowed to be present in the resin as equally as possible.

In addition, it is preferable that, in the core, a core substrate is any one of a honeycomb core and a foam core.

With this configuration, regarding the panel including the honeycomb core or the foam core that contains many cavities and is weak to a local load, the strength of the resin that reinforces the periphery of the fastening hole can be favorably ensured.

In addition, it is preferable that the skin is a fiber-reinforced composite material, and the panel forming step includes a process of heating and curing the skins in a prepreg state.

With this configuration, regarding the panel where the skin in the prepreg state needs to be heated and cured, the strength of the resin that reinforces the periphery of the fastening hole can be favorably ensured.

In addition, it is preferable that the through-hole forming step is a step of forming the through-hole in a range surrounding the formation position of one fastening hole.

With this configuration, the size of the through-hole can be reduced as much as possible, and the amount of the resin with which one through-hole is filled can be reduced. As a result, the occurrence of cracking in the resin can be favorably suppressed.

In addition, it is preferable that the method for manufacturing a panel an elastic body disposing step of disposing an elastic body in the through-hole before the filling step, in which the filling step is a step of filling a periphery of the elastic body with the resin containing the reinforcing fibers after the elastic body disposing step.

With this configuration, the expansion of the resin in the direction in which the through-hole is enlarged can be absorbed by the elastic body. As a result, in the cooling process, the tensile stress generated in the resin can be reduced, and thus the occurrence of cracking in the resin can be suppressed.

In addition, it is preferable that the method for manufacturing a panel further includes an adhesive agent disposing step of disposing an adhesive agent containing a foaming agent on an inner surface of the through-hole; a dummy core disposing step of disposing a dummy core inside the adhesive agent; a curing step of curing the adhesive agent; and a dummy core removing step of removing the dummy core from an inside of the through-hole, in which the filling step is a step of filling the inside of the adhesive agent with the resin after the dummy core removing step.

With this configuration, the expansion of the resin in the direction in which the through-hole is enlarged can be absorbed by the adhesive agent containing the foaming agent. As a result, in the cooling process, the tensile stress generated in the resin can be reduced, and thus the occurrence of cracking in the resin can be suppressed.

In addition, it is preferable that the method for manufacturing a panel further includes a fastening hole forming step of forming the fastening hole that penetrates the core and the skins at a position of the through-hole filled with the resin after the panel forming step.

With this configuration, regarding the panel where the fastening hole is formed, the strength of the resin that reinforces the periphery of the fastening hole can be favorably ensured.

In addition, it is preferable that the reinforcing fibers are glass fillers.

With this configuration, the toughness of the resin can be more favorably improved.

In order to solve the above-described problems and to achieve the object, according to the present invention, there is provided a panel including: a core including a plurality of cavities; and skins fixed to both surfaces of the core, respectively, in which in the core, a through-hole is formed in a range including a formation position of a fastening hole, and the through-hole is filled with a resin that contains reinforcing fibers containing at least short fibers.

With this configuration, the through-hole of the core is filled with the resin that contains the reinforcing fibers containing at least the short fibers. Therefore, the reinforcing fibers favorably suppress the propagation of cracking in the resin. That is, toughness of the resin is improved. As a result, even when the resin expands by heating, the resin is contracted in the subsequent cooling process, and the tensile stress is generated in the resin in a state where the core and the skins are bonded, the occurrence of cracking in the resin can be suppressed. Accordingly, according to the present invention, it is possible to obtain a panel where the strength of the resin that reinforces the periphery of the fastening hole can be favorably ensured.

It is preferable that the panel further includes the fastening hole that penetrates the core and the skins at a position of the through-hole filled with the resin.

In addition, it is preferable that the reinforcing fibers are glass fillers.

With this configuration, the toughness of the resin can be more favorably improved.

### Brief Description of Drawings

FIG. 1 is a diagram illustrating a state where a panel according to a first embodiment is fastened to another structure.
FIG. 2 is a perspective view schematically illustrating a core.
FIG. 3 is a flowchart illustrating an example of a method for manufacturing the panel according to the first embodiment.
FIG. 4 is a diagram schematically illustrating each step of FIG. 3.
FIG. 5 is a flowchart illustrating an example of a procedure of a core forming step according to the first embodiment.
FIG. 6 is a perspective view illustrating a core substrate.
FIG. 7 is a diagram illustrating a through-hole forming step.
FIG. 8 is a diagram illustrating a state where a resin containing glass fillers is prepared.
FIG. 9 is a diagram illustrating a filling step.
FIG. 10 is a flowchart illustrating an example of a procedure of a core forming step in a method for manufacturing a panel according to a second embodiment.
FIG. 11 is a diagram illustrating a state of an elastic body disposing step and a filling step.
FIG. 12 is a flowchart illustrating an example of a procedure of a core forming step in a method for manufacturing a panel according to a third embodiment.
FIG. 13 is a diagram illustrating a state of an adhesive agent disposing step, a dummy core disposing step, an adhesive sheet curing step, a dummy core removing step, and a filling step.
FIG. 14 is a perspective view schematically illustrating a core according to a modification example.
FIG. 15 is a diagram illustrating an example of a state of a force acting on the resin when the panel filled with the resin is heated and subsequently cooled. Description of Embodiments

Hereinafter, embodiments of a method for manufacturing a panel and a panel according to the present invention will be described in detail based on the drawings. The present invention is not limited to the embodiments.

### [First Embodiment]

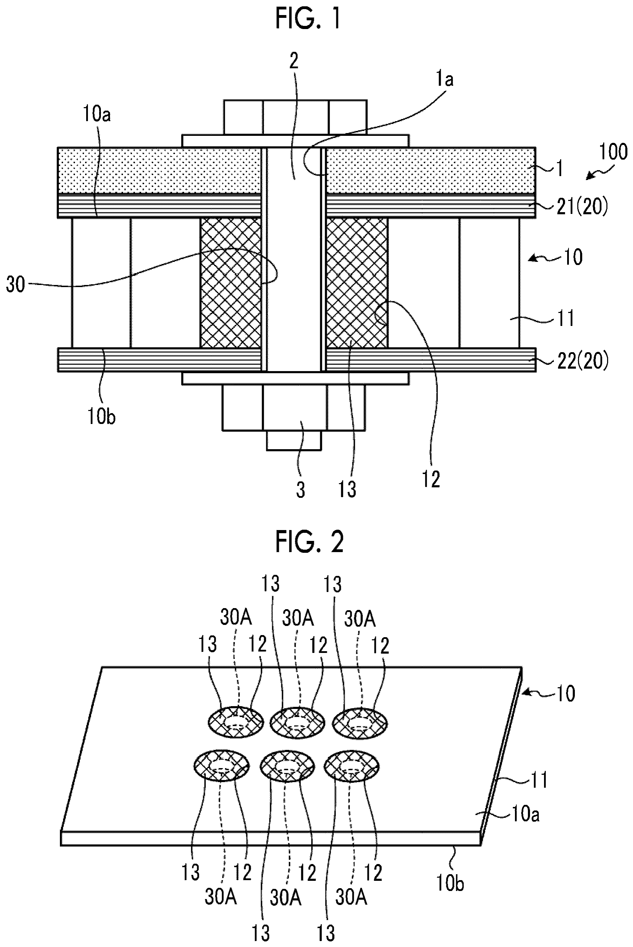

FIG. 1 is a diagram illustrating a state where a panel according to a first embodiment is fastened to another structure. A panel 100 illustrated in FIG. 1 is applied to, for example, a door of an aircraft. The panel 100 may be applied to a portion other than a door of an aircraft, for example, another device such as a vehicle. The panel 100 includes a core 10 and skins 20 as illustrated in FIG. 1. The panel 100 is a so-called sandwich panel where the skins 20 are fixed to both surfaces of the core 10, respectively. In the panel 100, a plurality of fastening holes 30 for inserting a bolt 2 as a fastener are formed.

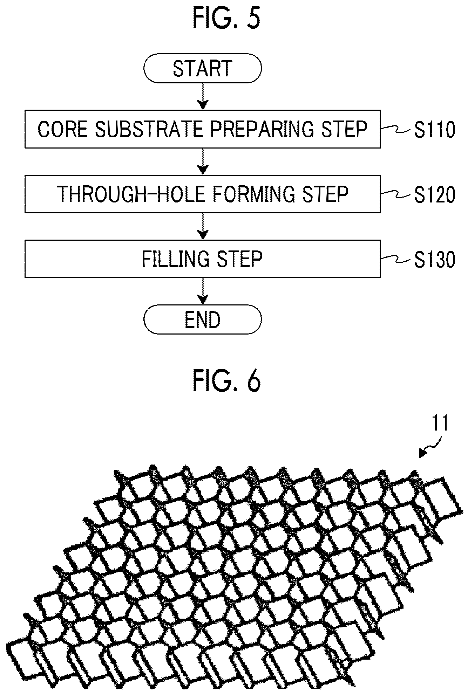

FIG. 2 is a perspective view schematically illustrating a core. In the first embodiment, the core 10 is formed of a core substrate 11 (refer to FIG. 6) that is a honeycomb core. More specifically, the core substrate 11 has a structure where a plurality of cells formed in a hexagonal or rectangular shape are arranged adjacent to each other. The core substrate 11 only needs to include a plurality of cavities, and may be, for example, a foam core or a roll core. In addition, a material of the core substrate 11 may be any material as long as it can form a through-hole 12 and potting for filling a resin 13 can be performed.

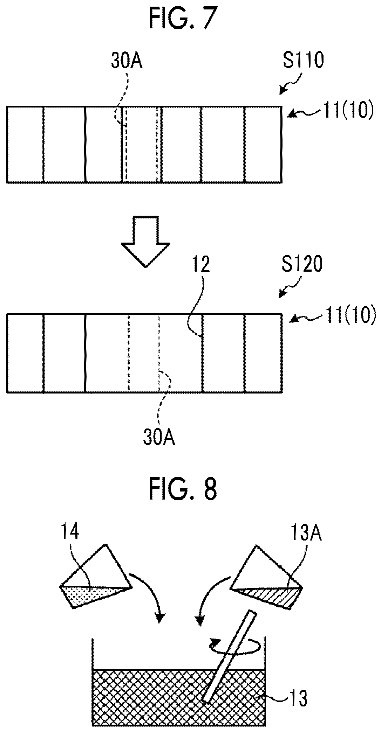

In the core substrate 11, the through-hole 12 that penetrates one end surface 10a to another end surface 10b is formed. As illustrated in FIG. 2, the through-hole 12 is formed in a range surrounding a formation position 30A of one fastening hole 30 (a range surrounding each of the formation positions 30A). Here, the formation position 30A refers to a predetermined position where the fastening hole 30 is to be formed in the panel 100. The inside of the through-hole 12 is filled with the resin 13 as illustrated in FIGS. 1 and 2. In the first embodiment, as the resin 13, a two-liquid mixing room-temperature curable resin, a thermosetting resin, or a thermoplastic resin can be used. The resin 13 contains glass fillers 14 (refer to FIG. 8) as reinforcing fibers. Here, when the fiber length of each of the reinforcing fibers is large, the fluidity of the resin 13 decreases, and there is a possibility that every corner of the through-hole 12 cannot be completely filled with the resin 13. Therefore, the reinforcing fibers may contain at least short fibers having a predetermined fiber length or less. It is more preferable that all the reinforcing fibers are short fibers having a predetermined fiber length or less. The predetermined fiber length is, for example, 1 mm or more and 5 mm or less. When the reinforcing fibers are the glass fillers 14, the optimum value of the predetermined fiber length is 3 mm. In addition, the weight of the reinforcing fibers (glass fillers 14) is 1% or more and less than 5% with respect to the total weight of the resin 13 containing the reinforcing fibers (glass fillers 14).

The skins 20 are fixed to both surfaces of the core 10, respectively, that is, the skin is fixed to each of the end surface 10a and the end surface 10b. In the first embodiment, each of the skins 20, is a fiber-reinforced composite material obtained by infiltrating a reinforced fiber preform with a matrix resin. The skins 20 are bonded and fixed (joined) to the end surfaces 10a and 10b through an adhesive sheet (not illustrated). When each of the skins 20 itself has adhesiveness, the adhesive sheet may be removed. In the following description, appropriately, the skin 20 fixed to the one end surface 10a will be referred to as "first skin 21", and the skin 20 fixed to the other end surface 10b will be referred to as "second skin 22".

As illustrated in FIG. 1, the panel 100 is fastened to another structure 1 by the bolt 2 and a nut 3 as a fastener. In the other structure 1, a fastening hole 1a into which the bolt 2 can be inserted is formed. In FIG. 1, the fastening holes 1a and 30a are illustrated to be larger than the actual ones for convenience of description. The fastening holes 1a and 30a only need to be formed in the sizes corresponding to the bolt 2. In the panel 100, the bolt 2 is inserted into the fastening hole 30 through the fastening hole 1a in a state where the first skin 21 abuts against the other structure 1. On the second skin 22 side, by screwing the nut 3 into the bolt 2, the panel 100 is fastened and fixed to the structure 1.

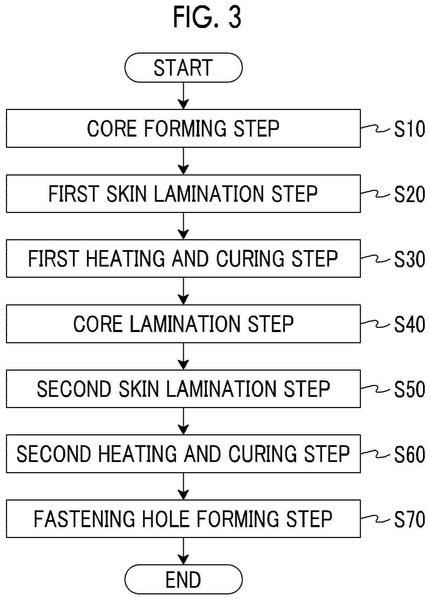

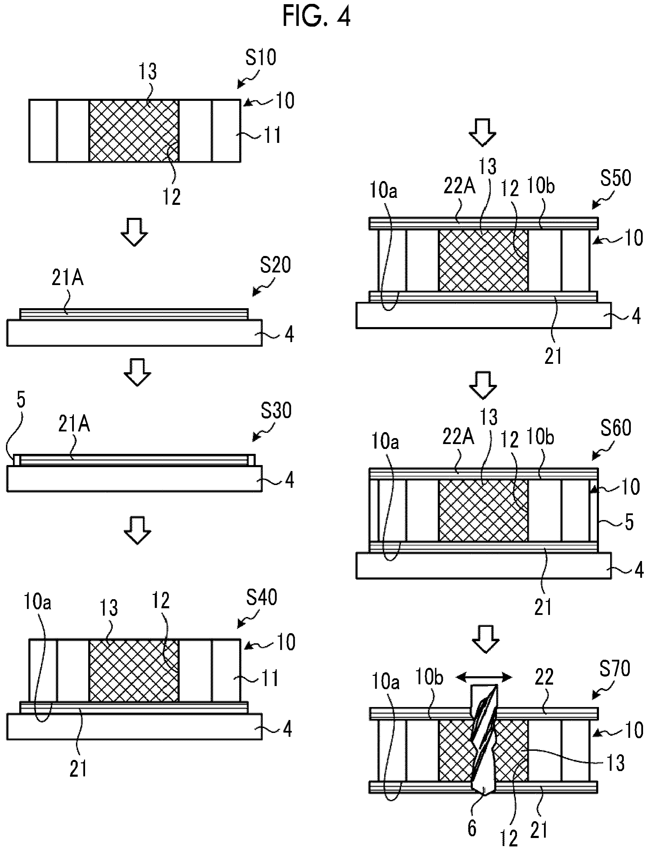

Next, a method for manufacturing the panel according to the first embodiment will be described. FIG. 3 is a flowchart illustrating an example of the method for manufacturing the panel according to the first embodiment, and FIG. 4 is a diagram schematically illustrating each step of FIG. 3. As illustrated in FIG. 3, the method for manufacturing the panel according to the first embodiment includes a core forming step S10, a first skin lamination step S20, a first heating and curing step S30, a core lamination step S40, a second skin lamination step S50, a second heating and curing step S60, and a fastening hole forming step S70.

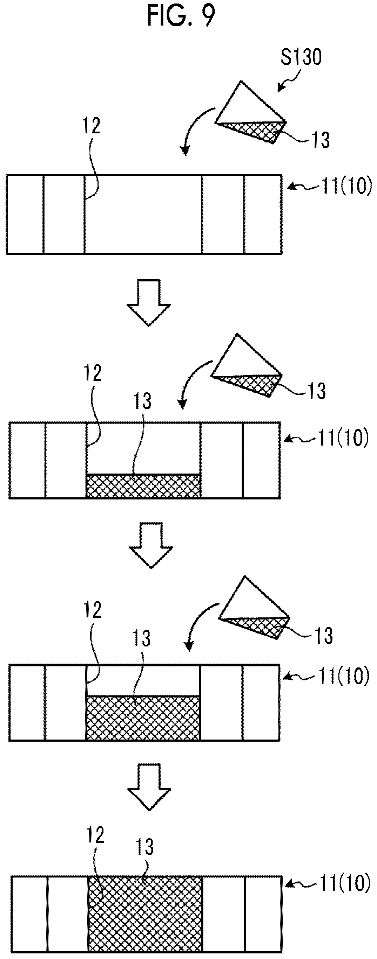

The core forming step S10 is a step of forming the core 10. The core forming step S10 may be performed at any timing before the core lamination step S40. Hereinafter, the core forming step S10 will be described in more detail with reference to FIGS. 5 to 9. FIG. 5 is a flowchart illustrating an example of a procedure of the core forming step according to the first embodiment, FIG. 6 is a perspective view illustrating the core substrate, FIG. 7 is a diagram illustrating the through-hole forming step, FIG. 8 is a diagram illustrating a state where the resin containing the glass filler is prepared, and FIG. 9 is a diagram illustrating the filling step.

As illustrated in FIG. 5, the core forming step S10 includes a core substrate preparing step S110, a through-hole forming step S120, and a filling step S130.

The core substrate preparing step S110 is a step of preparing the core substrate 11. As illustrated in FIG. 6, the core substrate 11 is a honeycomb core having a honeycomb structure.

The through-hole forming step S120 is a step of forming the through-hole 12 in the core 10 (core substrate 11) in the range including the formation position 30A at which the fastening hole 30 is formed in the panel 100. In the first embodiment, as illustrated in FIGS. 2 and 7, the through-hole 12 is formed in the range surrounding each of the formation positions 30A where the fastening hole 30 is formed in the panel 100. The through-hole 12 can be formed, for example, using a cutting device (not illustrated).

The filling step S130 is a step of filling the through-hole 12 with the resin 13 containing the glass fillers 14, that is, performing so-called potting. As illustrated in FIG. 8, the resin 13 containing the glass fillers 14 can be obtained by mixing a resin 13A that is a base, the glass fillers 14, and a curing agent (not illustrated) and stirring and kneading the mixture. At this time, the weight of the glass fillers 14 is 1% or more and less than 5% with respect to the total weight of the resin 13 containing the glass fillers 14.

As illustrated in FIG. 9, in the filling step S130, the inside of the through-hole 12 is filled with the obtained resin 13 containing the glass fillers 14 multiple times. In the present embodiment, the filling amount of the resin 13 for each filling is the same. In this regard, the filling amount of the resin 13 may change depending on each filling. After waiting for the elapse of a time required for removing voids from the resin 13 for each filling, the through-hole 12 is filled with the new resin 13. When the resin 13 is a two-liquid mixing room-temperature curable resin, the resin 13 is completely cured by waiting for elapse of a predetermined time at room temperature after filling all the through-holes 12 with the resin 13. In addition, when the resin 13 is a thermoplastic resin, the resin 13 is completely cured by cooling after filling all the through-holes 12 with the resin 13. When the resin 13 is a thermosetting resin, the resin 13 is completely cured by heating after filling all the through-holes 12 with the resin 13. As a result, each of the through-holes 12 is filled with the resin 13 containing the glass fillers 14, and the core 10 illustrated in FIG. 1 is formed. The inside of the through-hole 12 may be filled with the resin 13 in one go.

The description of FIGS. 3 and 4 will be made again. The first skin lamination step S20 is a step of laminating a fiber-reinforced composite material 21A that forms the first skin 21 on a mold 4. In the first embodiment, in the first skin lamination step S20, the fiber-reinforced composite material 21A in a prepreg state is laminated on the mold 4.

The first heating and curing step S30 is a step of heating and curing the fiber-reinforced composite material 21A in the prepreg state. More specifically, as illustrated in FIG. 4, the fiber-reinforced composite material 21A on the mold 4 is sealed with, for example, a sealing member 5 such as a plastic film. Next, by heating and pressurizing the fiber-reinforced composite material 21A in the sealing member 5, the resin of the fiber-reinforced composite material 21A in the prepreg state is cured. As a result, the first skin 21 is formed.

The core lamination step S40 is a step of laminating the core 10 on the first skin 21 through an adhesive sheet (not illustrated). That is, the end surface 10a of the core 10 abuts against the first skin 21 through the adhesive sheet (not illustrated). As a result, the core 10 and the first skin 21 are bonded (joined). As described above, when the first skin 21 has adhesiveness, the adhesive sheet may be removed.

The second skin lamination step S50 is a step of laminating a fiber-reinforced composite material 22A that forms the second skin 22 on the first skin 21 and the core 10 laminated through an adhesive sheet (not illustrated). In the first embodiment, in the second skin lamination step S50, the fiber-reinforced composite material 22A in a prepreg state is laminated on the end surface 10b of the core 10 through an adhesive sheet (not illustrated). As a result, the core 10 and the fiber-reinforced composite material 22A that forms the second skin 22 are bonded (joined). As described above, when the second skin 22 has adhesiveness, the adhesive sheet may be removed.

The second heating and curing step S60 is a step of heating and curing the fiber-reinforced composite material 22A in the prepreg state. More specifically, as illustrated in FIG. 4, the first skin 21, the core 10, and the fiber-reinforced composite material 22A laminated are sealed with, for example, a sealing member 5 such as a plastic film. Next, by heating and pressurizing the first skin 21, the core 10, and the fiber-reinforced composite material 22A in the sealing member 5, the resin of the fiber-reinforced composite material 22A in the prepreg state is cured, and the second skin 22 is formed. As a result, the core 10, the first skin 21, and the second skin 22 form a panel (are integrated), and the panel 100 is formed. Accordingly, the first skin lamination step S20 to the second heating and curing step S60 configure a panel forming step of disposing the skins 20 on both surfaces of the core 10, respectively, heating the core 10 and the skins 20, and joining the core 10 and the skins 20 to form a panel.

The fastening hole forming step S70 is a step of forming a plurality of fastening holes 30 in the core 10 and the skins 20 that form the panel. More specifically, as illustrated in FIG. 4, the fastening hole 30 is formed by piercing the core 10 and the skins 20, for example, using a cutting tool 6 provided in a cutting device (not illustrated) at a position of each of the through-holes 12 filled with the resin 13. As a result, as illustrated in FIG. 1, the panel 100 where the fastening holes 30 are formed is formed.

Here, in the above-described second heating and curing step S60, in order to cure the fiber-reinforced composite material 22A in the prepreg state, all of the first skin 21, the core 10, and the fiber-reinforced composite material 22A are heated. Through this heating process, a change in dimension occurs in the resin 13. That is, when the resin 13 is a room-temperature curable resin or a thermosetting resin and is softened and expands by heating, the resin 13 expands in a direction in which the through-hole 12 is enlarged. Next, in the cooling process, although the resin 13 is contracted, the core 10 is bonded to the first skin 21 and the second skin 22 after the heating process, and the shape of the through-hole 12 does not substantially change. As a result, tensile stress is generated between the resin 13 and the core 10. Due to this tensile stress, cracking may occur in the resin 13, and there is a possibility that the periphery of the fastening hole 30 cannot be favorably reinforced by the resin 13. In the first embodiment, as described above, the through-hole 12 of the core 10 is filled with the resin 13 containing the glass fillers 14. Therefore, the glass fillers 14 favorably suppress propagation of cracking in the resin 13. That is, toughness of the resin 13 is improved. As a result, even when the resin 13 is contracted and the tensile stress is generated in the resin 13 in a state where the core 10 and the skins 20 are bonded, the occurrence of cracking in the resin 13 can be suppressed.

As described above, with the panel 100 and the method for manufacturing the panel according to the first embodiment, the occurrence of cracking in the resin 13 can be suppressed. Accordingly, the strength of the resin 13 that reinforces the periphery of the fastening hole 30 can be favorably ensured.

In the present embodiment, the resin 13 contains the glass fillers 14 as the reinforcing fibers. As a result, the toughness of the resin 13 can be more favorably improved. In this regard, the reinforcing fibers in the resin 13 are not limited to the glass fillers 14 as long as the toughness of the resin 13 can be favorably improved. The reinforcing fibers may be, for example, other inorganic fibers such as carbon fibers. In addition, the reinforcing fibers may be organic fibers such as aramid fibers.

In addition, the weight of the reinforcing fibers (glass fillers 14) is 1% or more and less than 5% with respect to the total weight of the resin 13 containing the reinforcing fibers (glass fillers 14).

With this configuration, while allowing the glass fillers 14 to suppress the occurrence of cracking in the resin 13, an increase in the viscosity of the resin 13 caused by containing the glass fillers 14, that is, a decrease in fluidity can be suppressed, and manufacturing easiness of the core 10 can be ensured.

In addition, in the filling step S130, the through-hole 12 is filled with the resin 13 multiple times.

With this configuration, the through-hole 12 is filled with a relatively small amount of the resin 13 for each filling. Therefore, as compared to a case where the through-hole 12 is filled with a large amount of the resin 13, gas is likely to be separated from the inside of the resin 13, and formation of voids in the resin 13 can be suppressed. In addition, the glass fillers 14 can be allowed to be present in the resin 13 as equally as possible.

In addition, in the core 10, the core substrate 11 is a honeycomb core.

With this configuration, regarding the panel 100 including the honeycomb core that contains many cavities and is weak to a local load, the strength of the resin 13 that reinforces the periphery of the fastening hole 30 can be favorably ensured.

In addition, the skin 20 is a fiber-reinforced composite material, and the panel forming step (Step S20 to Step S60 of FIG. 3) includes the process (the second heating and curing step of FIG. 3) of heating and curing the skin 20 (the second skin 22) in the prepreg state.

With this configuration, regarding the panel 100 where the skin 20 (the second skin 22) in the prepreg state needs to be heated and cured, the strength of the resin 13 that reinforces the periphery of the fastening hole 30 can be favorably ensured.

In addition, the through-hole forming step S120 is a step of forming the through-hole 12 in the range surrounding the formation position 30A of one fastening hole 30.

With this configuration, the size of the through-hole 12 can be reduced as much as possible, and the amount of the resin 13 with which one through-hole 12 is filled can be reduced. As a result, the occurrence of cracking in the resin 13 can be favorably suppressed.

### [Second Embodiment]

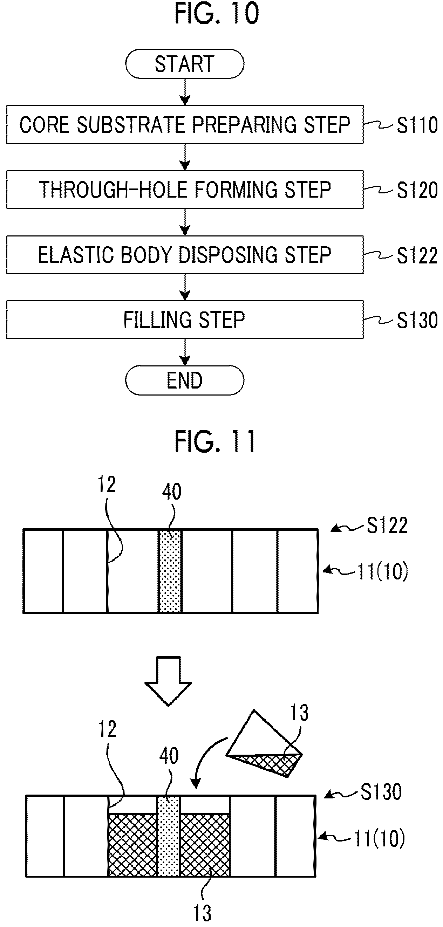

Next, a method for manufacturing a panel according to a second embodiment will be described. FIG. 10 is a flowchart illustrating an example of a procedure of a core forming step in the method for manufacturing the panel according to the second embodiment.

In the second embodiment, the core forming step S10 includes an elastic body disposing step S122 in addition to the core substrate preparing step S110, the through-hole forming step S120, and the filling step S130 of the core forming step S10 according to the first embodiment. The method for manufacturing the panel according to the second embodiment is the same as the method for manufacturing the panel according to the first embodiment, except that the elastic body disposing step S122 is added. Therefore, the description of the steps other than the elastic body disposing step S122 and the filling step S130 will be omitted.

FIG. 11 is a diagram illustrating a state of the elastic body disposing step and the filling step. In the elastic body disposing step S122, as illustrated in FIG. 11, an elastic body 40 is disposed inside the through-hole 12 formed in the through-hole forming step S120. The elastic body 40 has an elastic modulus where expansion can be absorbed when the resin 13 expands by heating, and, for example, a sponge-like member can be used. In the second embodiment, in the filling step S130, as illustrated in FIG. 11, the periphery of the elastic body 40 disposed inside the through-hole 12 is filled with the resin 13 containing the glass fillers 14. Even in the second embodiment, in the filling step S130, the periphery of the elastic body 40 is filled with the resin 13 multiple times.

With this configuration, the expansion of the resin 13 in the direction in which the through-hole 12 is enlarged can be absorbed by the elastic body 40. As a result, in the cooling process, the tensile stress generated in the resin 13 can be reduced, and thus the occurrence of cracking in the resin 13 can be suppressed. The elastic body 40 can be removed from the inside of the through-hole 12 when the fastening hole 30 is formed by the cutting tool 6 in the above-described fastening hole forming step S70.

### [Third Embodiment]

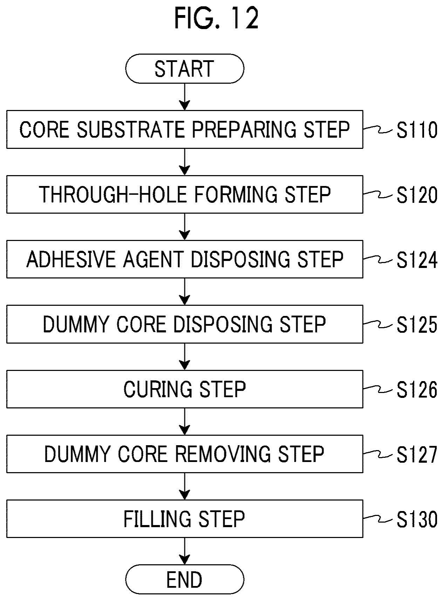

Next, a method for manufacturing a panel 100 according to a third embodiment will be described. FIG. 12 is a flowchart illustrating an example of a procedure of a core forming step in the method for manufacturing the panel according to the third embodiment.

In the third embodiment, the core forming step S10 includes an adhesive agent disposing step S124, a dummy core disposing step S125, an adhesive agent curing step S126, and a dummy core removing step S127 in addition to the core substrate preparing step S110, the through-hole forming step S120, and the filling step S130 of the core forming step S10 according to the first embodiment. The method for manufacturing the panel according to the third embodiment is the same as the method for manufacturing the panel according to the first embodiment, except that the adhesive agent disposing step S124 to the dummy core removing step S127 are added. Therefore, the description of the steps other than the adhesive agent disposing step S124 to the dummy core removing step S127 and the filling step S130 will be omitted.

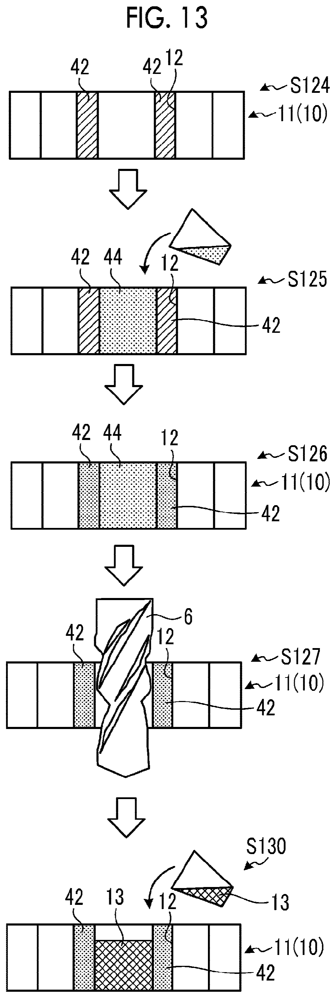

FIG. 13 is a diagram illustrating a state of the adhesive agent disposing step, the dummy core disposing step, the adhesive sheet curing step, the dummy core removing step, and the filling step.

The adhesive agent disposing step S124 is a step of disposing an adhesive agent 42 containing a foaming agent on an inner surface of the through-hole 12 as illustrated in FIG. 13. The adhesive agent 42 is formed in a sheet shape in the present embodiment, and is pasted to the inner surface over the entire periphery of the through-hole 12. The adhesive agent 42 is not limited to being formed in a sheet shape, and may be disposed on the inner surface by coating or the like.

The dummy core disposing step S125 is a step of disposing a dummy core 44 inside the adhesive agent 42 disposed on the inner surface of the through-hole 12. In the present embodiment, as the dummy core 44, for example, a thermosetting resin can be used. The dummy core 44 formed of a resin that is cured in advance may be disposed inside the adhesive agent 42. In addition, the dummy core 44 formed of a metallic material may be disposed inside the adhesive agent 42.

The adhesive agent curing step S126 is a step of curing the adhesive agent 42. In the adhesive agent curing step S126, for example, the adhesive agent 42 is heated and cured. At this time, by disposing the dummy core 44 inside the adhesive agent 42, the degree of foaming (expansion) of the adhesive agent 42 containing the foaming agent can be adjusted. That is, in the filling step S130 as a subsequent step, a space filled with the resin 13 can be ensured by the dummy core 44.

The dummy core removing step S127 is a step of removing the dummy core 44 from the inside of the through-hole 12. In the dummy core removing step S127, it is considered to remove the dummy core 44 from the inside of the adhesive agent 42, for example, using the cutting tool 6 provided in the cutting device (not illustrated). When the dummy core 44 is formed of a resin, for example, the dummy core 44 may be removed, for example, using a chemical.

In the third embodiment, the filling step S130 is a step of filling the inside of the adhesive agent 42 from which the dummy core 44 is removed in the dummy core removing step S127 with the resin 13 containing the glass fillers 14. Even in the third embodiment, in the filling step S130, the inside of the adhesive agent 42 is filled with the resin 13 multiple times.

With this configuration, the expansion of the resin 13 in the direction in which the through-hole 12 is enlarged can be absorbed by the adhesive agent 42 containing the foaming agent. As a result, in the cooling process, the tensile stress generated in the resin 13 can be reduced, and thus the occurrence of cracking in the resin 13 can be suppressed.

In the first embodiment to the third embodiment, the weight of the glass fillers 14 is 1% or more and less than 5% with respect to the total weight of the resin 13 containing the glass fillers 14. In this regard, as long as the occurrence of cracking in the resin 13 can be suppressed, the weight of the glass fillers 14 may be less than 1% with respect to the total weight of the resin 13 containing the glass fillers 14. In addition, as long as an increase in the viscosity of the resin 13, that is, a decrease in fluidity can be suppressed, and manufacturing easiness of the core 10 can be ensured, the weight of the glass fillers 14 may be 5% or more with respect to the total weight of the resin 13 containing the glass fillers 14.

In the first embodiment to the third embodiment, in the through-hole forming step S120, the through-hole 12 is formed in the range surrounding each of the formation positions 30A where the fastening hole 30 is formed, but the formation range of the through-hole 12 is not limited thereto. FIG. 14 is a perspective view schematically illustrating a core according to a modification example. As illustrated in the drawing, the through-hole 12 may be formed in a range surrounding a plurality of formation positions 30A where the fastening hole 30 is formed. As a result, the number of the through-holes 12 to be formed can be reduced, and the number of steps of filling the through-hole 12 with the resin 13 can be reduced.

In the first embodiment to the third embodiment, the fiber-reinforced composite material 21A in the prepreg state is cured to form the first skin 21 (the first heating and curing step S30), and the core 10 is laminated on the first skin 21 (the core lamination step S40). In this regard, the first heating and curing step S30 may be removed. That is, in the second heating and curing step S60, by simultaneously curing the fiber-reinforced composite materials 21A and 22A, the first skin 21 and the second skin 22 may be formed.

In the first embodiment to the third embodiment, the skin 20 is a fiber-reinforced composite material. In this regard, the skin 20 may be formed of a material (for example, a metallic material) other than a fiber-reinforced composite material to be fixed to the core 10 using an adhesive agent that is heated and cured. In this case, the first heating and curing step S30 configuring the above-described panel forming step (Step S20 to Step S60 of FIG. 3) is skipped. In addition, the second heating and curing step S60 is a process of curing the adhesive agent for bonding the core 10 and the skins 20 to join the core 10 and the skins 20. This way, even when the heating process is performed to cure the adhesive agent for bonding the core 10 and the skins 20 in the panel forming step, with the method for manufacturing the panel according to the first embodiment to the third embodiment, the occurrence of cracking in the resin 13 can be favorably suppressed.

### Reference Signs List

1: structure
1a: fastening hole
2: bolt
3: nut
4: mold
5: sealing member
6: cutting tool
10: core
10a: end surface
10b: end surface
11: core substrate
12: through-hole
13, 13A: resin
14: glass filler
20: skin
21: first skin
21A, 22A: fiber-reinforced composite material
22: second skin
30: fastening hole
30A: formation position
40: elastic body
42: adhesive agent
44: dummy core
100: panel

## Claims

1. A method for manufacturing a panel where skins are fixed to both surfaces of a core including a plurality of cavities, respectively, the method comprising:
a through-hole forming step of forming a through-hole in the core in a range including a formation position where a fastening hole is formed in the panel;
a filling step of filling the through-hole with a resin that contains reinforcing fibers containing at least short fibers; and
a panel forming step of disposing the skins on both surfaces of the core, respectively, heating the core and the skins, and joining the core and the skins to form a panel.

2. The method for manufacturing a panel according to Claim 1,
wherein a weight of the reinforcing fibers is 1% or more and less than 5% with respect to a total weight of the resin containing the reinforcing fibers.

3. The method for manufacturing a panel according to Claim 1 or 2,
wherein in the filling step, the through-hole is filled with the resin multiple times.

4. The method for manufacturing a panel according to Claim 1 or 2,
wherein in the core, a core substrate is any one of a honeycomb core and a foam core.

5. The method for manufacturing a panel according to Claim 1 or 2,
wherein the skin is a fiber-reinforced composite material, and
the panel forming step includes a process of heating and curing the skins in a prepreg state.

6. The method for manufacturing a panel according to Claim 1 or 2,
wherein the through-hole forming step is a step of forming the through-hole in a range surrounding the formation position of one fastening hole.

7. The method for manufacturing a panel according to Claim 1 or 2, further comprising an elastic body disposing step of disposing an elastic body in the through-hole before the filling step,
wherein the filling step is a step of filling a periphery of the elastic body with the resin containing the reinforcing fibers after the elastic body disposing step.

8. The method for manufacturing a panel according to Claim 1 or 2, further comprising:
an adhesive agent disposing step of disposing an adhesive agent containing a foaming agent on an inner surface of the through-hole;
a dummy core disposing step of disposing a dummy core inside the adhesive agent;
a curing step of curing the adhesive agent; and
a dummy core removing step of removing the dummy core from an inside of the through-hole,
wherein the filling step is a step of filling the inside of the adhesive agent with the resin containing the reinforcing fibers after the dummy core removing step.

9. The method for manufacturing a panel according to Claim 1 or 2, further comprising a fastening hole forming step of forming the fastening hole that penetrates the core and the skins at a position of the through-hole filled with the resin after the panel forming step.

10. The method for manufacturing a panel according to Claim 1 or 2,
wherein the reinforcing fibers are glass fillers.

11. A panel comprising:
a core including a plurality of cavities; and
skins fixed to both surfaces of the core, respectively,
wherein in the core, a through-hole is formed in a range including a formation position of a fastening hole, and
the through-hole is filled with a resin that contains reinforcing fibers containing at least short fibers.

12. The panel according to Claim 11, further comprising the fastening hole that penetrates the core and the skins at a position of the through-hole filled with the resin.

13. The panel according to Claim 11 or 12,
wherein the reinforcing fibers are glass fillers.
